# EUROPEAN PATENT APPLICATION

(11) **EP 2 645 820 A1**
(43) Date of publication of application: **02.10.2013**
(21) Application number: 13157806.4
(22) Date of filing: 05.03.2013
(51) Int. Cl.: H05B 33/08

(54) **Lighting control circuit and illumination control device**

(30) Priority: 28.03.2012 JP 2012074461
(71) Applicant: Toshiba Lighting & Technology Corporation, Yokosuka-shi Kanagawa 237-8510 (JP)
(72) Inventor: Niino, Shingo, Kanagawa, 237-8510 (JP); Ishida, Yasufumi, Kanagawa, 237-8510 (JP); Koshino, Masashi, Kanagawa, 237-8510 (JP); Kato, Toshiya, Kanagawa, 237-8510 (JP); Yamazaki, Isao, Kanagawa, 237-8510 (JP)
(74) Representative: Bokinge, Ole

(57) **Abstract**

According to one embodiment, a lighting control circuit includes a rectifying device configured to rectify an output of an alternating constant-current power supply device capable of changing an output current value, a power converting section configured to receive an output of the rectifying device and variably output direct-current power, and a solid-state light-emitting element supplied with the output of the power converting section to be lit. A shunting device configured to shunt a part of an output current from the alternating constant-current power supply is provided on an input side of the rectifying device.

## Description

### FIELD

Embodiments described herein relate generally to a lighting control circuit capable of dimming and lighting a solid-state light-emitting element and an illumination control device employing the lighting control circuit.

### BACKGROUND

For example, in a marker lamp system in an airport, electric power is supplied from an alternating constant-current power supply device to a plurality of marker lamps via a saturable isolation transformer. The alternating constant-current power supply device is configured to be capable of changing an output current value such that the marker lamps can be marked at desired brightness even at night or in a peripheral illuminance environment.

A bulb such as a halogen bulb has been mainly used as a light source for a marker lamp. However, in recent years, a maker lamp has been proposed in which a solid-state light-emitting element such as a light-emitting diode (hereinafter referred to as LED) is used from the viewpoint of power saving, long life, and the like. The solid-state light-emitting element such as the LED is lit by a direct current and can obtain a required light output with a small electric current compared with the bulb. Therefore, if it is attempted to connect the marker lamp employing the solid-state light-emitting element to the alternating constant-current power supply device for the bulb in the past or if it is attempted to connect the marker lamp employing the solid-state light-emitting element together with the marker lamp employing the bulb, it is necessary to rectify an output of the alternating constant-current power supply device, reduce a current value, and supply electric power to the solid-state light-emitting element.

Therefore, a tap switching circuit for switching an output of the isolation transformer is provided to switch the supplied power to the solid-state light-emitting element according to an output current value of the alternating constant-current power supply device.

However, since the isolation transformer including a plurality of taps and the tap switching circuit are necessary, the entire device is increased in size. Therefore, it may be difficult to house the device in a marker lamp main body (housing) or the marker lamp main body may be increased in size.

A constant voltage circuit is provided and a bypass circuit is provided on an output side of a rectifying device to bypass an electric current redundant for lighting of the solid-state light-emitting element to the bypass circuit, whereby a supplied voltage to the solid-state light-emitting element is set to a predetermined voltage.

However, since the redundant current is bypassed on the output side of the rectifying device, a power loss in a rectifying element, for example, a diode included in the rectifying device is non-negligible. That is, if four diodes are bridge-connected in the rectifying device, a power loss of 2 x input current x forward-direction voltage of diodes always occurs. For example, when an electric current of about hundred milliampere unit is necessary for the marker lamp employing the solid-state light-emitting element, if an electric current of about several amperes is always fed to the rectifying device, it is evident that a power loss is excessively caused. Further, in addition to the occurrence of a power loss, a large-capacity rectifying device is necessary. Therefore, improvement is demanded.

### BRIEF DESCRIPTION OF THE DRAWINGS

FIG. 1 is a circuit diagram of a lighting control circuit and an illumination control device according to a first embodiment;
FIG. 2 is a waveform chart for explaining a high-frequency on and off operation period ratio of a switching element included in the lighting control circuit;
FIG. 3 is a circuit diagram of a lighting control circuit and an illumination control device according to a second embodiment;
FIG. 4 is a circuit diagram of an example of a shunting device of the lighting control circuit; and
FIG. 5 is a circuit diagram of another example of the shunting device of the lighting control circuit.

### DETAILED DESCRIPTION

It is an object of the present invention to provide a lighting control circuit that can realize a reduction in size and a reduction in a power loss and an illumination control device employing the lighting control circuit.

In general, according to one embodiment, a lighting control circuit includes: a rectifying device configured to rectify an output of an alternating constant-current power supply device capable of changing an output current value; a power converting section configured to receive an output of the rectifying device and variably output direct-current power; and a solid-state light-emitting element supplied with the output of the power converting section to be lit. The lighting control circuit further includes a control device configured to detect an output current value of the alternating constant-current power supply device and control the output of the power converting section according to the detected output current value to thereby set a light output of the solid-state light-emitting element to a light output corresponding to the output current value. A shunting device configured to shunt a part of an output current from the alternating constant-current power supply is provided on an input side of the rectifying device.

The shunting device may include a resistor in a part thereof. However, the shunting device is desirably configured by a capacitive component and/or an inductive component which causes a less power loss or desirably includes the capacitive component and/or the inductive component. From the viewpoint of a reduction in shape and weight, the shunting device desirably mainly includes the capacitive component. As the capacitive component, an electrolytic capacitor, in particular, a non-polar (bipolar) electrolytic capacitor can be used.

According to this embodiment, a transformer with taps and a tap switching circuit for reducing (adjusting) a supplied current to the solid-state light-emitting element are not essential. Therefore, it is possible to reduce the size and the weight of the entire device. Since a part of the output current of the alternating constant-current power supply device is shunted on the input side of the rectifying device, an electric current value flowing into the rectifying device can be reduced. Therefore, a power loss in the rectifying device can be reduced compared with the past. A power loss in the shunting device can be reduced by selecting components as explained above.

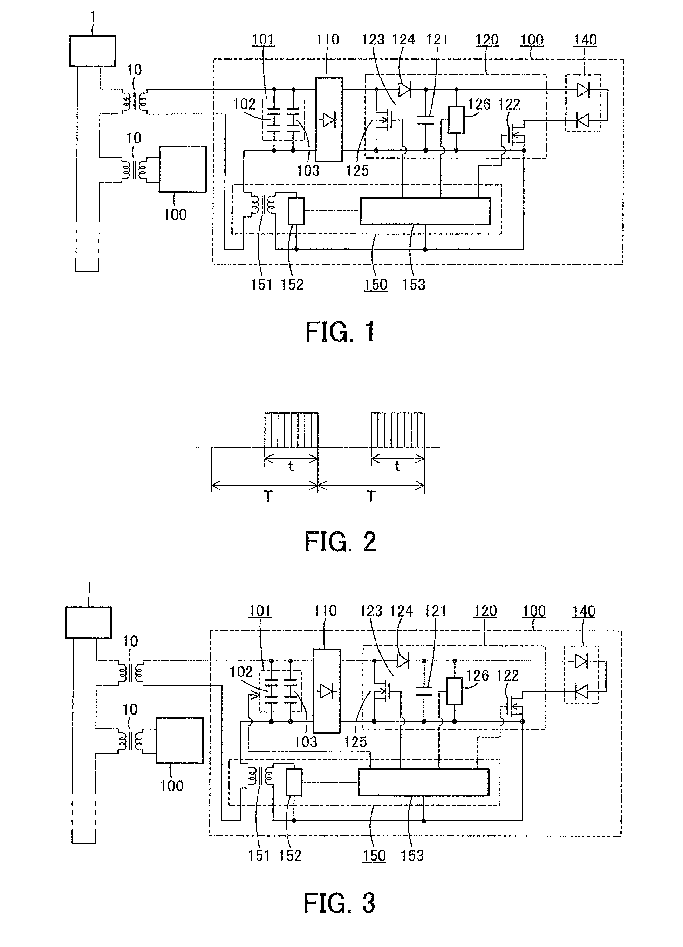

FIG. 1 is a circuit diagram of a lighting control circuit and an illumination control device according to a first embodiment. FIG. 2 is a waveform chart for explaining a high-frequency on and off operation period ratio of a switching element of the lighting control circuit.

In FIG. 1, reference numeral 1 denotes an alternating constant-current power supply device. A lighting control circuit 100 is connected to the alternating constant-current power supply device 1 via, for example, a saturable isolation transformer 10. A plurality of isolation transformers 10 and a plurality of lighting control circuits 100 are provided and connected to each other in series (in FIG. 1, only a part of the plurality of isolation transformers 10 and the plurality of lighting control circuits 100 is shown in detail). The isolation transformer 10 is saturated during an open circuit failure on a secondary side to enable power supply to the other isolation transformers 10 (the lighting control circuits 100) .

In the case of a power supply device for marker lamps in an airport, the alternating constant-current power supply device 1 is configured to be capable of changing an output current value in, for example, five stages of 6.6 A, 5.2 A, 4.1 A, 3.4 A, and 2.8 A. As such an alternating constant-current power supply device 1, for example, an alternating constant-current power supply device of a phase control type that outputs a phase control waveform using an SCR (Silicon Controlled Rectifier), an alternating constant-current power supply device of a resonant type that outputs a sine wave, and an alternating constant-current power supply device of an inverter control type that outputs a sine wave can be used. However, naturally, alternating constant-current power supply devices of other types may be used.

The isolation transformer 10 only has to be saturated or conducted during an open circuit failure on the secondary side or a load side to enable power supply to the other lighting control circuits 100. Therefore, another saturable element, a conductive element of a voltage reaction type, or the like can be used instead of the isolation transformer 10.

The lighting control circuit 100 inputs an output of the alternating constant-current power supply device 1 to a rectifying device 110 via a shunting device 101.

The shunting device 101 includes non-polar electrolytic capacitors 102 and 103. Each of the non-polar electrolytic capacitors 102 and 103 is equivalently a type in which the same poles (e.g., negative poles) of polar electrolytic capacitor elements are opposed to and connected to each other. In this embodiment, each of the non-polar electrolytic capacitors 102 and 103 is formed by four electrolytic capacitor elements having 470 micro F.

The polar electrolytic capacitors may be configured by opposing and connecting the same poles of the polar electrolytic capacitors to each other or, as explained above, may be configured by using an inductor or by being combined with the inductor.

Selection of a shunting ratio and an impedance value of the shunting device 101 are explained below.

The rectifying device 110 is configured by, for example, a diode bridge. However, in some cases, the rectifying device 110 may be a half-wave rectifier circuit or may be configured by combining a switching element with control electrode such as an SCR or a transistor and a diode.

A power converting section 120 is provided on an output side of the rectifying device 110. A solid-state light-emitting element 140 is provided on an output side of the power converting section 120.

A power converting section 120 is configured to be capable of changing output power. In this embodiment, the power converting section 120 includes, for example, a smoothing capacitor functioning as a smoothing section 121 configured to smooth an output of the rectifying device 110. The power converting section 120 includes, for example, a field-effect transistor functioning as a switching element 122 connected to the solid-state light-emitting element 140 in series between both output ends of the smoothing section 121. The power converting section 120 is configured to be capable of changing output power by turning on and off the switching element 122 at a high frequency and by subjecting an on and off operation period to pulse width control (PWM) as explained below.

In this embodiment, the power converting section 120 includes a constant voltage section 123 for converting an output of the smoothing section 121 into a constant voltage. The constant voltage section 123 mainly includes a switching device 125 provided on the output side of the rectifying device 110 to be electrically separated from the smoothing section 121 by a diode for backflow prevention 124 and a voltage detecting device 126 configured to detect both end voltages of the smoothing section 121.

According to a detection result of the voltage detecting device 126, conduction of the switching device 125 is controlled by a control device 150 explained below to convert an output voltage of the smoothing section 121 into a constant voltage.

An input current of the rectifying device 110 is already shunted by the shunting device 101 to be relatively small. Therefore, in this regard, the power converting section 120 is different from, for example, a configuration in which a constant voltage circuit is provided and a bypass circuit is provided on an output side of a rectifying device and an electric current redundant for lighting of a solid-state light-emitting element is bypassed to the bypass circuit (this configuration is hereinafter referred to as comparative example).

When the constant voltage section 123 is used, the constant voltage section 123 is not limited to the constant voltage section in this embodiment and can be selected as appropriate from various kinds of constant voltage sections.

The solid-state light-emitting element 140 is, for example, an LED. Two, four, or another required number of solid-state light-emitting elements 140 are connected in series, connected in parallel, or connected in series and in parallel. The solid-state light-emitting element 140 may be an organic EL or other light-emitting elements.

The control device 150 detects an output current of the alternating constant-current power supply device 1 and controls output power of the power converting section 120 according to a detection signal. In this embodiment, the switching element 122 is turned on and off at a high frequency and a high-frequency on and off operation period is subjected to pulse width control (PWM).

A current signal in detecting the output current of the alternating constant-current power supply device 1 can be a route mean square value, an average value, a conduction phase, or the like according to a type, an output waveform, and the like of the alternating constant-current power supply device 1. In short, output level indicated by the output current of the alternating constant-current power supply device 1 is detected. A current detecting section 151 is a current detection transformer in FIG. 1. A detection signal of the current detecting section 151 is converted into an appropriate direct-current signal by a waveform shaping circuit 152.

A control section 153 of the control device 150 controls a high-frequency on and off operation period ratio (a high-frequency on and off operation period in one period of the PWM/one period of the PWM) of the switching element 122 of the power converting section 120 according to an output of the waveform shaping circuit 152. For example, as shown in FIG. 2, the control section 153 controls, at one period (T) of a PWM signal (e. g. , between several hundreds hertz to several tens kilohertz), a time ratio of a high-frequency on and off operation period (t) in which a signal for turning on and off the switching element 122 at a high frequency (e.g., between several hundreds hertz to several tens megahertz) is output. Consequently, the control section 153 changes a supplied power amount to the solid-state light-emitting element 140 and changes a light output.

The control section 153 is suitably configured by mainly a microcomputer or an IC in terms of a reduction in size and weight. If the control section 153 is configured by mainly the microcomputer, it is easy to store or calculate conversion data in order to match a supplied current amount-to-light output characteristic in the solid-state light-emitting element 140 to a supplied current amount-to-light output characteristic in a bulb. However, naturally, the control section 153 is not limited to this.

Further, in this embodiment, a feedback control section may be added. For example, an electric current flowing to the solid-state light-emitting element 140 may be detected and the high-frequency on and off operation period (t) of the switching element 122 or a frequency of on and off or an on-duty may be changed to set the electric current to a predetermined electric current compared with a reference value corresponding to a dimming degree. Consequently, it is possible to control an electric current actually flowing to the solid-state light-emitting element 140 to an electric current corresponding to a dimming degree and accurately fix a light output.

Electric power for the control device 150 may be obtained from an output of the rectifying device 110 or from an output of the current detecting section 151 or may be obtained by separately providing a falling voltage transformer.

Action in this embodiment is explained.

If the alternating constant-current power supply device 1 is set to output an electric current for obtaining a light output of 100%, i.e., output an electric current of 6.6 A in this embodiment, a constant current of 6.6 A is supplied to the lighting control circuit 100.

In each of the lighting control circuits 100, first, some electric current of the electric current of 6.6 A is shunted (bypassed) by the shunting device 101 and the remaining electric current is input to the rectifying device 110.

A vector of the impedance of the shunting device 101 and a vector of the impedance on a load side on and after the rectifying device 110 are often different. Therefore, phases of electric currents flowing to the shunting device 101 and the load side are often different. Consequently, calculation of an impedance value of the shunting device 101 for an appropriate shunting ratio is complicated. However, the impedance value can be obtained by calculation. An appropriate impedance value can be obtained by an experiment or the like on the basis of a rough calculation value.

In this embodiment, the appropriate shunting ratio indicates a range of a shunting ratio in which the solid-state light-emitting element 140 can be lit as desired and an electric current for enabling a reduction of a power loss in the rectifying device 110 can be fed to the rectifying device 110 even during a light output of 100% and even in a required dimmed lighting range. In this embodiment, since the impedance value of the shunting device 101 is fixed, if the impedance of the shunting device 101 is designed to input an appropriate electric current to the rectifying device 110 during minimum dimmed lighting (darkest lighting), an electric current larger than necessary flows into the rectifying device 110 during 100% lighting.

However, an inflow current to the rectifying device 110 can be still remarkably reduced compared with an inflow current in the comparative example because of the presence of the shunting device 101. According to the reduction in the inflow current, it is possible to reduce a power loss in the rectifying device 110. In this embodiment, if the alternating constant-current power supply device 1 outputs an electric current of 6.6 A in order to obtain a light output of 100%, an electric current of any one of 1.3 A, 3.3 A and 4.2 A is set to be input to the rectifying device 110.

A direct-current voltage output from the rectifying device 110 is smoothed by the smoothing section 121, converted into a predetermined direct-current voltage, and fixed by the constant voltage section 123.

The direct-current voltage is supplied to the solid-state light-emitting element 140 via the power converting section 120.

On the other hand, the control device 150 detects, with the current detecting section 151, an output current of the alternating constant-current power supply device 1. Since the 100% electric current of 6.6 A is output now, the control section 153 subjects the high-frequency on and off operation period of the switching element 122 of the power converting section 120 to PWM control and supplies an electric current of, for example, 350 mA to the solid-state light-emitting element 140 in terms of a root mean square value. Consequently, the solid-state light-emitting element 140 is lit at brightness of 100%.

If the output current of the alternating constant-current power supply device 1 is 5.2 A during 25% output, an electric current smaller than the set current (any one of 1.3 A, 3.3 A, and 4.2 A) is input to the rectifying device 110. In the control device 150, the current detecting section 151 detects the electric current of 5.2 A and gives a detection signal to the control section 153.

The control section 153 subjects the high-frequency on and off operation period of the switching element 122 of the power converting section 120 to the PWM control according to the detection signal (set period t shorter than the period t during 100% lighting). Consequently, an electric current of, for example, 88 mA is supplied to the solid-state light-emitting element 140 in terms of a root means square value. The solid-state light-emitting element 140 is lit at brightness of 25%.

A dimming range can be arbitrarily set. However, in this embodiment, since the alternating constant-current power supply device 1 is configured to be capable of changing an output current value in five stages, it is possible to perform dimming in an arbitrary number of stages among the five stages. However, the dimming range is not limited to this. For example, so-called continuous dimming for continuously changing a light output may be performed.

In any case, the shunting device 101 is designed to input an electric current for enabling lighting of the solid-state light-emitting element 140 to the rectifying device 110 even if an output current value from the alternating constant-current power supply device 1 corresponds to a darkest dimming lower limit.

A second embodiment is explained with reference to FIG. 3. In this embodiment, components the same as or corresponding to the components in the embodiment shown in FIG. 1 are denoted by the same reference numerals and signs and explanation of the components is omitted.

In this embodiment, an impedance value of the shunting device 101 can be changed according to an output current value of the alternating constant-current power supply device 1.

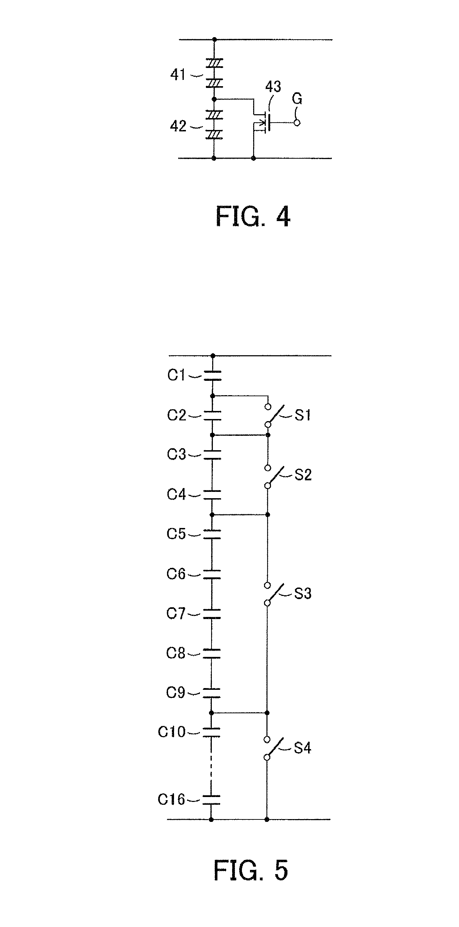

A specific example of a change in an impedance value is explained with reference to FIGS. 4 and 5. FIG. 4 is an example in which the impedance value changes in two stages. One of two non-polar electrolytic capacitors 41 and 42 of different types or the same rating connected in series can be short-circuited. As a short-circuit switch, for example, a field-effect transistor 43 is used.

It is possible to switch the impedance value of the shunting device 101 by controlling a gate of the field-effect transistor 43 according to a signal from the control section 153. That is, if a detection signal of the current detecting section 151 is equal to or larger than a predetermined value, the field-effect transistor 43 is turned on to change the impedance of the shunting device 101 to only the non-polar electrolytic capacitor 41. The shunting device 101 shunts a relatively large electric current. An electric current in the opposite direction of the field-effect transistor 43 can be circulated by a parasitic diode mechanically incorporated in the field-effect transistor 43.

On the other hand, if the detection signal of the current detecting section 151 is smaller than the predetermined value, the field-effect transistor 43 is turned off to change the impedance of the shunting device 101 to the non-polar electrolytic capacitors 41 and 42. The shunting device 101 shunts a relatively small electric current.

According to this embodiment, it is possible to change an electric current to be shunted, i.e., an electric current input to the rectifying device 110 according to a dimming degree (according to an output current value of the alternating constant-current power supply device 1) and further reduce a power loss in the rectifying device 110.

As the short-circuit switch, besides the field-effect transistor, other semiconductor switching elements, relays, and the like can be used. It is possible to select the short-circuit switch taking into account costs, a shape, a power loss, and the like.

FIG. 5 is an example in which the impedance value is changed in multiple stages. In this example, the impedance value is changed in five stages according to a change in an output of the alternating constant-current power supply device 1 in five stages of 6.6 A, 5.2 A, 4.1 A, 3.4 A, and 2.8 A.

That is, sixteen non-polar capacitors C1 to C16 having the same rating are connected in series and switches S1, S2, S3, and S4 are provided respectively in parallel to the non-polar capacitor C2, in parallel to the non-polar capacitors C3 to C4, in parallel to the non-polar capacitors C5 to C8, and in parallel to the non-polar capacitors C9 to C16.

If an output of the alternating constant-current power supply device 1 is 6.6 A, the switches S1 to S4 are turned on to change the impedance of the shunting device 101 to only the non-polar capacitor C1. The shunting device 101 can shunt a larger electric current. If the output of the alternating constant-current power supply device 1 is 5.2 A, the switch S1 is turned off and the switches S2 to S4 are turned on to change the impedance of the shunting device 101 to the non-polar capacitors C1 and C2. An impedance value twice as large as an impedance value in the case of 6.6 A is obtained.

Similarly, on and off of the switches S1 to S4 can be controlled according to an output current of the alternating constant-current power supply device 1. If the output of the alternating constant-current power supply device 1 is a minimum output of 2.8 A, all the switches S1 to S4 are turned off to change the impedance of the shunting device 101 to the non-polar capacitors C1 to C16. An impedance value sixteen times as large as the impedance value in the case of 6.6 A is obtained.

According to this example, the impedance value of the shunting device 101 is changed to 100%, 50%, 25%, 12.5%, and 6.25% according to dimming % of 100%, 25%, 5%, 1%, and 0.2% corresponding to the outputs 6.6 A, 5.2 A, 4.1 A, 3.4 A, and 2.8 A. Therefore, a shunting ratio can be approximated.

If the impedance value of the shunting device 101 is changed as in this embodiment, various connection relations can be adopted such as parallel connection and series and parallel connection besides series connection of the impedance elements.

The preferred embodiment of the present invention is mainly explained above. However, the present invention is not limited to the embodiment. Various modifications are allowed without departing from the spirit of the present invention.

For example, the lighting control circuit is not limited to the lighting control circuit for marker lamps in an airport and is suitably a lighting control circuit urged to be capable of performing dimmed lighting using the alternating constant-current power supply device.

Besides the power converting section that turns on and off current circulation to the solid-state light-emitting element, the power converting section may be a power converting section that controls, with the control device, an on-duty and a switching frequency of the switching device using a DC-DC conversion device including the switching device such as a falling voltage chopper to control power supply to the solid-state light-emitting element.

While certain embodiments have been described, these embodiments have been presented by way of example only, and are not intended to limit the scope of the inventions. Indeed, the novel embodiments described herein may be embodied in a variety of other forms; furthermore, various omissions, substitutions, and changes in the form of the embodiments described herein may be made without departing from the spirit of the inventions. The accompanying claims and their equivalents are intended to cover such forms or modifications as would fall within the scope and spirit of the inventions.

## Claims

1. A lighting control circuit supplied with electric power from an alternating constant-current power supply device (1) capable of changing an output current value, the light control circuit comprising:
a rectifying device (110) configured to rectify an output supplied from the alternating constant-current power supply device (1);
a power converting section (120) configured to receive an output of the rectifying device (110) and variably output direct-current power;
a solid-state light-emitting element (140) supplied with the output of the power converting section (120) to be lit;
a shunting device (101) provided on an input side of the rectifying device (110) and configured to shunt a part of an output from the alternating constant-current power supply device (1); and
a control device (150) configured to detect an output current value of the alternating constant-current power supply device (1) and control the output of the power converting section (120) according to the detected output current value to thereby set a light output of the solid-state light-emitting element (140) to a light output corresponding to the output current value.

2. The circuit according to claim 1, wherein the shunting device (101) is configured to be capable of changing, according to the output current value of the alternating constant-current power supply device (1), a current amount to be shunted.

3. The circuit according to claim 1 or 2, wherein the shunting device (101) is configured by non-polar electrolytic capacitors (102) (103).

4. An illumination control device comprising:
an alternating constant-current power supply device (1) capable of changing an output current value; and
a plurality of the lighting control circuits (100) according to any one of claims 1 to 3 connected in series on an output side of the alternating constant-current power supply device (1).
